(19) Europäisches Patentamt / European Patent Office / Office européen des brevets

(11) **EP 4 516 816 A1**

(12) **EUROPEAN PATENT APPLICATION**
published in accordance with Art. 153(4) EPC

(43) Date of publication:
**05.03.2025 Bulletin 2025/10**

(21) Application number: **24767368.4**

(22) Date of filing: **04.03.2024**

(51) International Patent Classification (IPC):
$C08F\ 2/44^{(2006.01)}$    $C08F\ 220/06^{(2006.01)}$
$C08F\ 220/28^{(2006.01)}$    $C08F\ 220/38^{(2006.01)}$
$C08F\ 220/56^{(2006.01)}$    $C08F\ 222/06^{(2006.01)}$
$C08K\ 3/34^{(2006.01)}$    $C08J\ 3/075^{(2006.01)}$
$C08J\ 3/205^{(2006.01)}$    $C08J\ 3/24^{(2006.01)}$

(52) Cooperative Patent Classification (CPC):
C08F 2/44; C08F 220/06; C08F 220/28;
C08F 220/38; C08F 220/56; C08F 222/06;
C08J 3/075; C08J 3/205; C08J 3/24; C08K 3/34

(86) International application number:
**PCT/KR2024/002737**

(87) International publication number:
**WO 2024/186079 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.03.2023 KR 20230028618
29.02.2024 KR 20240030239**

(71) Applicant: **LG Chem, Ltd.**
**Yeongdeungpo-gu**
**Seoul 07336 (KR)**

(72) Inventors:
• JANG, Youngjin
  Daejeon 34122 (KR)
• YOON, Kiyoul
  Daejeon 34122 (KR)
• HAN, Chang Hun
  Daejeon 34122 (KR)
• WON, Tae Young
  Daejeon 34122 (KR)
• SOHN, Jungmin
  Daejeon 34122 (KR)
• SIMONYAN, Arsen
  Daejeon 34122 (KR)
• BORGMANN, Carolin
  Daejeon 34122 (KR)

(74) Representative: **Plasseraud IP**
**104 Rue de Richelieu**
**CS92104**
**75080 Paris Cedex 02 (FR)**

(54) **COMPOSITION FOR PREPARING SUPERABSORBENT POLYMER AND METHOD FOR PREPARING SUPERABSORBENT POLYMER USING SAME**

(57)    Provided are a composition for preparing a super absorbent polymer and a method for producing a super absorbent polymer using the same. The composition for preparing a super absorbent polymer of the present invention comprises clay, and the clay is uniformly dispersed in the composition to exhibit a low sedimentation rate and excellent dispersion stability even during long-term storage. Accordingly, the composition for preparing a super absorbent polymer can be used for preparing a super absorbent polymer having excellent absorption properties.

【FIG. 1】

EP 4 516 816 A1

**Description**

[Technical Field]

Cross-reference to Related Application(s)

This application claims the benefit of Korean Patent Applications No. 10-2023-0028618 filed on March 3, 2023 and No. 10-2024-0030239 filed on February 29, 2024 with the Korean Intellectual Property Office, the disclosures of which are incorporated herein by reference in their entirety.

The present invention relates to a clay dispersion having excellent dispersion stability of clay, a composition for preparing a super absorbent polymer including the same, and a method of preparing a super absorbent polymer using the clay dispersion.

[Background Art]

A super absorbent polymer (SAP) is a synthetic polymeric material capable of absorbing moisture from 500 to 1000 times its own weight. Since super absorbent polymers started to be practically applied in sanitary products, now they have been widely used not only for hygiene products such as disposable diapers for children, sanitary materials for sanitary napkins, etc., but also for water retaining soil products for gardening, water stop materials for the civil engineering and construction, sheets for raising seedling, fresh-keeping agents for food distribution fields, materials for poultice, or the like.

Attempts are being made to introduce additives to improve the basic properties of super absorbent polymers, such as the centrifuge retention capacity (CRC) and absorption under pressure (AUP), and clay is one of them. However, clay particles tend to aggregate with each other in solutions having high ion concentrations, making it difficult to secure dispersion stability. Accordingly, it is difficult to uniformly disperse clay in a monomer composition for manufacturing super absorbent polymers, and as a result, the aggregated clay is unevenly distributed in the form of particles in the manufactured super absorbent polymer, making it difficult to obtain the effect of improving the properties of the super absorbent polymer.

Accordingly, it is required to develop a clay dispersion capable of exhibiting excellent dispersibility in the composition for preparing the super absorbent polymer and improving physical properties of the super absorbent polymer.

[Detailed Description of the Invention]

[Technical Problem]

There is provided a composition for preparing a super absorbent polymer, which comprises clay, wherein the clay is uniformly dispersed and the clay has excellence dispersion stability even when stored for a long period of time.

There is also provided a method of preparing a super absorbent polymer using the composition for preparing a super absorbent polymer.

[Technical Solution]

According to one embodiment of the present invention, there is provided a composition for preparing a super absorbent polymer comprising a clay; a polymer dispersant including two or more functional groups selected from the group consisting of an amine group, a carbonyl group, and a hydroxyl group; a water-soluble ethylenically unsaturated monomer having acid groups and at least a part of said acid groups being neutralized; and a polymerization initiator, wherein the polymer dispersant is included in an amount of more than 20 parts by weight to 200 parts by weight or less with respect to 100 parts by weight of the clay.

According to another embodiment of the present invention, there is provided a method of preparing a super absorbent polymer, the method including the steps of preparing a water-containing gel polymer by performing a polymerization reaction of the composition for preparing a super absorbent polymer by heating and/or irradiating light; preparing a base polymer by drying and pulverizing the water-containing gel polymer; and forming a surface-crosslinked layer by further crosslinking the surface of the base polymer in the presence of a surface crosslinking agent.

According to another embodiment of the present invention, there is provided a super absorbent polymer comprising a crosslinked polymer of a water-soluble ethylenically unsaturated monomers having an acid group and at least a portion of the acid group being neutralized; and a clay having a surface modified with a polymer dispersant including two or more functional groups selected from the group consisting of an amine group, a carbonyl group, and a hydroxyl group, wherein the polymer dispersant is included in an amount of more than 20 parts by weight to less than 200 parts by weight based on 100 parts by weight of the clay.

[Effect of the Invention]

A composition for preparing a super absorbent polymer of the present invention includes clay, and has a low sedimentation rate of clay particles, and excellent dispersion stability even during long-term storage. Therefore, the composition for preparing a super absorbent polymer can be usefully used for producing a super absorbent polymer having excellent absorption properties such as centrifugal retention capacity and absorbency under pressure, etc., and improved gel strength. In addition, a super absorbent polymer produced using the composition for preparing a super absorbent polymer has no concern about discoloration and exhibits excellent color characteristics.

[Brief Description of Drawings]

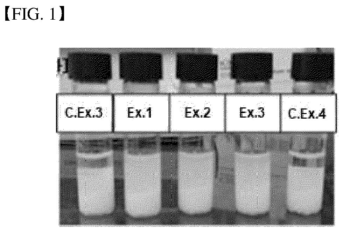

FIG. 1 is a photograph showing compositions for preparing a super absorbent polymer of Examples 1-1 to 1-3(Each is marked as Example 1 to 3), Comparative Example 1-3, and Comparative Example 1-4(Each is marked as Comparative Example 3 and 4), which was taken 48 hours after preparation of the compositions.

[Detailed Description of the Embodiments]

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

The present invention may be variously modified and have various forms, and specific exemplary embodiments are exemplified and explained in detail in the following description. However, it is not intended to limit the present invention to the specific exemplary embodiments and it must be understood that the present invention includes every modifications, equivalents, or replacements included in the spirit and technical scope of the present invention.

As used herein, 'clay' refers to a particle of a phyllosilicate mineral, or an aggregate of plurality of such particles, and 'clay dispersion' refers to a dispersion in which the clay is dispersed in a solvent.

As used herein, (meth)acrylate is used as a meaning including both acrylate and methacrylate.

As used herein, "base polymer" or "base polymer powder", which is in a particle or powder form prepared by drying or pulverizing a polymer which is obtained by polymerizing a water-soluble ethylenically unsaturated monomer, refers to a polymer without surface modification or surface crosslinking.

Hereinafter, the present invention will be described in detail.

According to one embodiment of the present invention, there is provided a composition for preparing a super absorbent polymer comprising a clay; a polymer dispersant including two or more functional groups selected from the group consisting of an amine group, a carbonyl group, and a hydroxyl group; a water-soluble ethylenically unsaturated monomer having acid groups and at least a part of said acid groups being neutralized; and a polymerization initiator, wherein the polymer dispersant is included in an amount of more than 20 parts by weight to 200 parts by weight or less with respect to 100 parts by weight of the clay.

Due to the polymer dispersant including two or more functional groups selected from the group consisting of an amine group, a carbonyl group, and a hydroxyl group, the composition for preparing a super absorbent polymer may remarkably improve dispersion stability of clay. Clay has a layered structure in which layers of small plates of silicate of about 1 nm thickness are stacked on top of each other due to strong van der Waals attraction. The polymer dispersant binds to the surface of the clay and delaminates the silicate layers (i.e., spreads them apart so that the interlayer distance exceeds 1 nm). As the chemically delaminated clay exhibits significantly improved dispersion stability, such that even when the clay dispersion included in a composition for preparing a super absorbent polymer including an alkali metal salt or a basic compound, clay particles may be uniformly dispersed in the composition without agglomeration or sedimentation.

Therefore, a super absorbent polymer prepared using the composition for preparing a super absorbent polymer may have further improved absorption properties, such as centrifuge retention capacity, absorbency under pressure, etc. In addition, since the polymer dispersant does not cause discoloration of the super absorbent polymer, the composition for preparing a super absorbent polymer of the present invention can produce a high-quality super absorbent polymer having excellent absorption properties and color characteristics.

As the clay, swelling or non-swelling clay may be used. The swelling clay is a layered organic material having water absorption, and montmorillonite, saponite, nontronite, laponite, beidellite, hectorite, vermiculite, magadite, bentonite, etc. may be used. As the non-swellable clay, kaolin, serpentine, and mica, etc. may be used. The clay may be used alone or in mixture of two or more thereof.

The clay having an average particle diameter (D50) of 0.025 $\mu$m or more, or 0.05 $\mu$m or more, or 0.1 $\mu$m or more, or 1 $\mu$m, and 10 $\mu$m or less, or 8 $\mu$m or less, or 5 $\mu$m or less may be used. When the average particle diameter (D50) of the clay is less than 0.025 $\mu$m, the effect of improving gel strength of the super absorbent polymer may not be sufficiently obtained. When the average particle diameter (D50) of the clay is more than 10 $\mu$m, it is difficult to achieve uniform dispersion in a water system due to the strong interlayer attraction of the clay, and it is difficult to uniformly modify the surface of the clay, and thus there may be a problem in that transparency is not secured after dispersion. The average particle diameter of the clay may be measured through a laser diffraction and dynamic light scattering method using a particle size analyzer.

Here, "particle size Dn" means the particle size at the n% point of the cumulative distribution of particle numbers according to particle size, and D50 means the particle size at the 50% point of the cumulative distribution of particle numbers according to particle size. The average particle size (D50) of the clay can be measured using a particle size analyzer through the Laser Diffraction and Dynamic Light Scattering methods. Specifically, the powder to be measured is dispersed in dispersion medium and introduced into a commercially available laser diffraction particle size measurement device (e.g., Mastersizer 3000 from Malvern) to measure a difference of diffraction pattern according to the particle size when the particles pass through the laser beam, yielding a particle size distribution. D50 can be measured by calculating the particle diameter at the point where 50% of the cumulative distribution of particle counts by particle diameter in the measuring device is reached.

The polymer dispersant includes two or more functional groups selected from the group consisting of an amine group, a carbonyl group, and a hydroxyl group, and is used in an amount of more than 20 parts by weight to 200 parts by weight or less with respect to 100 parts by weight of the clay.

As used herein, 'two or more functional groups selected from the group consisting of an amine group, a carbonyl group, and a hydroxyl group' is used as a meaning including two or more functional groups of an amine group, a carbonyl group, and a hydroxyl group in combination, such as an amide group including an amine group and a carbonyl group at the same time, a carboxyl group including a carbonyl group and a hydroxyl group at the same time, etc. For example, the 'polymer dispersant including an amine group and a carbonyl group' may include the amine group and the carbonyl group in the molecule, respectively, or may include an amide group in which the amine group and the carbonyl group are in combination.

The polymer dispersant including the functional groups may bind to the surface of the clay due to unshared electrons of nitrogen and oxygen atoms, and charges may be induced in the polymer due to a resonance phenomenon in the composition for preparing a super absorbent polymer with high ion concentrations. Due to these properties, the polymer dispersant may improve dispersibility of clay by delaminating its layered structure. Moreover, the polymer dispersant does not cause discoloration of the super absorbent polymer or does not deteriorate physical properties thereof, and therefore, may be suitably used in the preparation of the super absorbent polymer.

In this point of view, the polymer dispersant may preferably include an amine group and a carbonyl group; or a carbonyl group and a hydroxyl group. More preferably, the polymer dispersant may include an amide group and/or a carboxyl group.

Specific examples of the polymer dispersant may include one or more selected from the group consisting of polyvinylpyrrolidone, polyacrylamide, and polyacrylic acid. Preferably, polyvinylpyrrolidone may be used as the polymer dispersant.

A molecular weight of the polymer dispersant is not particularly limited. However, for example, the polymer dispersant having a weight average molecular weight of 2,500 g/mol or more, or 5,000 g/mol or more, or 10,000 g/mol or more, and 200,000 g/mol or less, or 100,000 g /mol or less, or 40,000 g/mol may be used. When the weight average molecular weight of the polymer dispersant is less than 2,500 g/mol, there may be problems in securing dispersibility and long-term stability because it is difficult to secure a sufficient distance between the silicate layers of clay when the polymer dispersant binds to the surface of the clay. When the weight average molecular weight is more than 200,000 g/mol, there is a difficulty in the process, and it is not effective for surface modification of the clay, and thus it is preferable to satisfy the above range.

The weight average molecular weight of the polymer dispersant may be determined by gel permeation chromatography (GPC) using a polystyrene standard.

For example, GPC analysis can be performed on a Waters PL-GPC220 instrument using a Polymer Laboratories PLgel MIX-B 300 mm long column, under the following conditions

Temperature of the column: 160°C
Solvent: 1,2,4-Trichlorobenzene
Flow rate: 1mL/min
Sample: Compounded to a concentration of 10 mg/10 mL, then supplied in a volume of 200 $\mu$L

The Mw and Mn values are derived using the calibration curve formed with polystyrene standards (Nine types of polystyrene standards with molecular weights of 2,000 / 10,000 / 30,000 / 70,000 / 200,000 / 700,000 / 2,000,000 / 4,000,000 / 10,000,000).

In order to ensure dispersibility of the clay, the polymer dispersant is used in an amount of more than 20 parts by weight to 200 parts by weight or less, preferably, in an amount of 23 parts by weight or more, or 25 parts by weight or more, and 150 parts by weight or less, or 100 parts by weight or less with respect to 100 parts by weight of the clay.

When the content of the polymer dispersant is 20 parts by weight or less with respect to 100 parts by weight of the clay, the degree of surface modification of the clay is insufficient and thus the interlayer spacing of the clay may not be sufficiently widened. Therefore, the dispersion stability of the clay is not sufficient, and thus the clay particles may easily agglomerate. In addition, when the content of the polymer dispersant is excessively high by exceeding 200 parts by weight with respect to 100 parts by weight of the clay, the polymer dispersant reduces the effect of improving physical properties, which may be provided by the clay, leading to deterioration of the physical properties of the super absorbent polymer.

The content of the clay in the composition for preparing a super absorbent polymer may be 0.1 part by weight or more, or 0.2 parts by weight or more, or 0.25 parts by weight or more, and 1 part by weight or less, or 0.7 parts by weight or less, or 0.5 parts by weight or less, based on 100 parts by weight of the ethylenically unsaturated monomer.

The water-soluble ethylenically unsaturated monomer has acid groups and at least a part of the acid groups may be neutralized. The water-soluble ethylenically unsaturated monomer is partially neutralized with an alkaline substance such as an alkali metal salt or an alkaline compound. As an alkaline metal salt capable of neutralizing the water-soluble ethylenically unsaturated monomer, sodium acrylate salt, etc. may be exemplified, or as an alkaline compound, caustic soda (NaOH), potassium hydroxide, ammonium hydroxide, etc. may be used.

The degree of neutralization of the water-soluble ethylenically unsaturated monomer is 50% to 95%, preferably 70% to 85%. When the degree of neutralization of the monomer is low, the water absorbency of the super absorbent polymer to be prepared may be lowered, and when the degree of neutralization is high, the monomer may be precipitated and it may be difficult to prepare the super absorbent polymer.

As the water-soluble ethylenically unsaturated monomer, any monomer may be used without particular limitation, as long as it is commonly used in the preparation of super absorbent polymers. Preferably, any one or more selected from the group consisting of anionic monomers and salts thereof, nonionic hydrophilic monomers, and amino group-containing unsaturated monomers and quaternary compounds thereof may be used. Specific examples of the water-soluble ethylenically unsaturated monomer may include one or more selected from the group consisting of anionic monomers such as acrylic acid, methacrylic acid, maleic anhydride, fumaric acid, crotonic acid, itaconic acid, 2-acryloyl ethane sulfonic acid, 2-methacryloyl ethane sulfonic acid, 2-(meth)acryloyl propane sulfonic acid, or 2-(meth)acrylamide-2-methylpropane sulfonic acid, and salts thereof; nonionic hydrophilic monomers such as (meth)acrylamide, N-substituted (meth)acrylate, 2-hydroxyethyl(meth)acrylate, 2-hydroxypropyl(meth)acrylate, methoxypolyethyleneglycol(meth)acrylate, or polyethyleneglycol(meth)acrylate; and amino group-containing unsaturated monomers such as (N,N)-dimethylaminoethyl(meth)acrylate or (N,N)-dimethylaminopropyl(meth)acrylamide, and quaternary compounds thereof.

The concentration of the water-soluble ethylenically unsaturated monomer may be about 20 parts by weight to 60 parts by weight, preferably, 40 parts by weight to 60 parts by weight with respect to 100 parts by weight of the composition for preparing a super absorbent polymer, and it may be at an appropriate concentration, taking into consideration polymerization time and reaction conditions, etc. When the concentration of the monomer is too low, the yield of the super absorbent polymer may be low and a problem may occur in economic feasibility. When the concentration is too high, a part thereof may precipitate or problems may be generated in the process, such as low pulverization efficiency during pulverization of the polymerized water-containing gel polymer, and physical properties of the super absorbent polymer may deteriorate.

As the polymerization initiator, depending on a polymerization method, a photopolymerization may employ a photopolymerization initiator, and a thermal polymerization may employ a thermal polymerization initiator.

However, even though the photopolymerization is performed, a certain amount of heat may be generated by UV irradiation or the like, and also generated with the polymerization reaction which is an exothermic reaction. Therefore, the thermal polymerization initiator may be further used.

The thermal polymerization initiator is not particularly limited, but one or more selected from the group consisting of persulfate-based initiators, azo-based initiators, hydrogen peroxide, and ascorbic acid may be preferably used. Specifically, examples of the persulfate-based initiators may include sodium persulfate ($Na_2S_2O_8$), potassium persulfate ($K_2S_2O_8$), ammonium persulfate (($NH_4)_2S_2O_8$) or the like. Examples of the azo-based initiators may include 2,2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid) or the like.

The photopolymerization initiator is not particularly limited, but one or more selected from the group consisting of benzoin ether, dialkyl acetophenone, hydroxyl alkylketone, phenyl glyoxylate, benzyl dimethyl ketal, acyl phosphine, and α-aminoketone may be preferably used. Meanwhile, specific examples of acyl phosphine may include diphenyl(2,4,6-trimethylbenzoyl)phosphine oxide.

The composition for preparing a super absorbent polymer may include a solvent. The applicable solvent may be used without limitation in its composition, as long as it is able to dissolve the above-described components. For example, one or more selected from the group consisting of water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethyl ether, toluene, xylene, butyrolactone, carbitol, methyl cellosolve acetate, and N,N-dimethylacetamide may be used as the solvent.

Meanwhile, the composition for preparing a super absorbent polymer may further include a crosslinking agent. As the crosslinking agent, a crosslinking agent having one or more functional groups capable of reacting with a water-soluble substituent of the water-soluble ethylenically unsaturated monomer while having one or more ethylenically unsaturated group; or a crosslinking agent having two or more functional groups capable of reacting with the water-soluble substituent of the monomer and/or a water-soluble substituent formed by hydrolysis of the monomer may be used.

Specific examples of the crosslinking agent may include one or more selected from the group consisting of N,N'-methylenebisacrylamide, trimethylolpropane tri(meth)acrylate, ethylene glycol di(meth)acrylate, (meth)acrylate, propylene glycol di(meth)acrylate, polyethylene glycol di(meth)acrylate, polypropylene glycol(meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triallylamine, ethylene glycol diglycidyl ether, propylene glycol, glycerin, and ethylene carbonate.

The crosslinking agent is included in an amount of 0.01 part by weight or more, 0.05 parts by weight or more, 0.1 part by weight or more, or 0.3 parts by weight or more, and 2 parts by weight or less, 1.5 parts by weight or less, or 1 part by weight or less with respect to 100 parts by weight of the water-soluble ethylenically unsaturated monomer, thereby crosslinking the polymerized polymer.

The composition for preparing a super absorbent polymer may further include additives such as a blowing agent, a thickener, a plasticizer, a preservation stabilizer, an antioxidant, etc., as needed.

For example, the composition for preparing a super absorbent polymer may include, as the blowing agent, one or more blowing agents selected from the group consisting of sodium bicarbonate, sodium carbonate, potassium bicarbonate, potassium carbonate, calcium bicarbonate, calcium carbonate, magnesium bicarbonate, and magnesium carbonate.

The blowing agent may be added in an amount of 0.01 part by weight or more, or 0.05 parts by weight or more, or 0.08 parts by weight or more, and 0.5 parts by weight or less, 0.3 parts by weight or less, or 0.2 parts by weight or less with respect to 100 parts by weight of the monomer.

The preparation method of the composition for preparing a super absorbent polymer is not particularly limited. For example, the composition for preparing a super absorbent polymer may be prepared by mixing at once the clay; the polymer dispersant; the water-soluble ethylenically unsaturated monomer; the alkali metal salt or alkali compound capable of neutralizing the water-soluble ethylenically unsaturated monomer; and the polymerization initiator in the presence of the solvent.

Alternatively, the composition for preparing a super absorbent polymer may be produced by mixing clay and a polymer dispersant with a solvent (the solvent used in the composition for preparing a super absorbent polymer may be used), thereby producing a clay dispersion, and then mixing the clay dispersion with the water-soluble ethylenically unsaturated monomer; the alkali metal salt or alkali compound capable of neutralizing the water-soluble ethylenically unsaturated monomer; and the polymerization initiator.

The composition for preparing a super absorbent polymer maintains excellent dispersion stability in the composition without agglomeration of the clay particles with each other or precipitation by including the clay and the polymer dispersant.

Specifically, a sedimentation rate of the clay in the composition for preparing a super absorbent polymer may be 100 μm/s or less, preferably, 50 μm/s or less, or 30 μm/s or less, or 10 μm/s or less, and 1 μm/s or more, or 5 μm/s or more. A method of measuring the sedimentation rate will be described in detail in Experimental Example below.

The composition for preparing a super absorbent polymer includes the clay, wherein the clay maintains excellent dispersion stability due to the polymer dispersant including two or more functional groups selected from the group consisting of an amine group, a carbonyl group, and a hydroxyl group, and thus the composition may be suitably used in the preparation of the super absorbent polymer with excellent absorption performances without a concern about discoloration.

Accordingly, according to still another embodiment of the present invention, a super absorbent polymer and a method of preparing the same are provided using the composition for preparing the super absorbent polymer.

The super absorbent polymer comprises a crosslinked polymer of a water-soluble ethylenically unsaturated monomers having an acid group and at least a portion of the acid group being neutralized; and a clay having a surface modified with a polymer dispersant including two or more functional groups selected from the group consisting of an amine group, a carbonyl group, and a hydroxyl group. The above super absorbent polymer may include the polymer dispersant in an amount of more than 20 parts by weight to less than 200 parts by weight based on 100 parts by weight of the clay.

The super absorbent polymer prepared from the above-described monomer composition for preparing a super absorbent polymer, has a form in which the said clay is uniformly dispersed inside and outside of the said crosslinked polymer.

The method of preparing a super absorbent polymer includes the steps of preparing a water-containing gel polymer by performing a polymerization reaction of the composition for preparing a super absorbent polymer by heating and/or irradiating light; preparing a base polymer by drying and pulverizing the water-containing gel polymer; and forming a surface-crosslinked layer by further crosslinking the surface of the base polymer in the presence of a surface crosslinking agent.

The polymerization method is largely classified into a thermal polymerization and a photopolymerization according to a polymerization energy source. When the thermal polymerization is performed, it may be commonly performed in a reactor like a kneader equipped with agitating spindles. When the photopolymerization is performed, it may be performed in a reactor equipped with a movable conveyor belt. The above-described polymerization method is an example only, and the present invention is not limited to the above-described polymerization methods.

For example, the water-containing gel polymer which is obtained by performing thermal polymerization while providing hot air to the above-described reactor like a kneader equipped with the agitating spindles or heating the reactor may have a size of centimeters or millimeters when it is discharged from an outlet of the reactor, according to the type of agitating spindles equipped in the reactor. Specifically, the size of the obtained water-containing gel polymer may vary depending on a concentration of the monomer composition fed thereto, a feeding speed or the like, and the water-containing gel polymer having a weight average particle diameter of about 2 mm to about 50 mm may be generally obtained.

Further, as described above, when the photopolymerization is performed in a reactor equipped with a movable conveyor belt, the obtained water-containing gel polymer may be usually a sheet-like water-containing gel polymer having a width of the belt. In this case, the thickness of the polymer sheet may vary depending on the concentration of the monomer composition fed thereto and the feeding speed. Usually, it is preferable to supply the monomer composition such that a sheet-like polymer having a thickness of about 0.5 cm to about 5 cm may be obtained. When the monomer composition is supplied to such an extent that the thickness of the sheet-like polymer becomes too thin, it is undesirable because the production efficiency is low, and when the thickness of the sheet-like polymer is more than 5 cm, the polymerization reaction may not evenly occur over the entire thickness because of the excessive thickness.

The water-containing gel polymer obtained by the above-mentioned method may have a water content of about 40% by weight to about 80% by weight. Meanwhile, the "water content" as used herein means a weight occupied by water with respect to the total weight of the water-containing gel polymer, which may be a value obtained by subtracting the weight of the dry polymer from the weight of the water-containing gel polymer. Specifically, the water content may be defined as a value calculated by measuring the weight loss due to evaporation of moisture in the polymer during the process of drying by raising the temperature of the polymer through infrared heating. At this time, the water content is measured under the drying conditions determined as follows: the drying temperature is increased from room temperature to about 180°C and then the temperature is maintained at 180°C, and the total drying time is set to 20 minutes, including 5 minutes for the temperature rising step.

After crosslinking-polymerizing the monomer, the base polymer power may be obtained through a process of drying, pulverizing, and classifying, etc. It is appropriate to prepare and provide the base polymer powder and a super absorbent polymer obtained therefrom each having a particle diameter of 150 $\mu$m to 850 $\mu$m through such a process of pulverizing and classifying, etc. More specifically, at least about 95% by weight or more of the base polymer powder and the super absorbent polymer obtained therefrom may have a particle diameter of about 150 $\mu$m to about 850 $\mu$m, and the fine particles having a particle diameter of less than 150 $\mu$m may be less than about 3% by weight.

As described above, as the particle size distribution of the base polymer powder and the super absorbent polymer is adjusted to a desirable range, the super absorbent polymer finally prepared may exhibit the above-described physical properties and superior liquid permeability.

On the other hand, methods of performing the drying, pulverizing, and classifying will be described in more detail as follows.

First, with regard to drying the water-containing gel polymer, as needed, a coarse pulverizing step may be further performed before drying, in order to increase the efficiency of the drying step.

In this regard, a pulverizer used here is not limited by its configuration, and specifically, it may include any one selected from the group consisting of a vertical pulverizer, a turbo cutter, a turbo grinder, a rotary cutter mill, a cutter mill, a disc mill, a shred crusher, a crusher, a chopper, and a disc cutter, but is not limited to the above-described examples.

In this regard, the coarse pulverizing step may be carried out such that the particle diameter of the water-containing gel polymer becomes about 2 mm to about 10 mm.

Pulverizing into a particle diameter of less than 2 mm is not technically easy due to the high water content of the water-containing gel polymer, and an agglomeration phenomenon between the pulverized particles may occur. Meanwhile, when the polymer is pulverized into a particle diameter of greater than 10 mm, the effect of increasing the efficiency in the subsequent drying step may be insignificant.

The water-containing gel polymer coarsely pulverized as above or the water-containing gel polymer immediately after polymerization without the coarsely pulverizing step is subjected to drying. In this regard, a drying temperature of the drying step may be about 150°C to about 250°C. When the drying temperature is lower than 150°C, it is apprehended that the drying time becomes too long and the physical properties of the super absorbent polymer finally formed may be deteriorated. When the drying temperature is higher than 250°C, it is apprehended that only the polymer surface is excessively dried, and thus fine particles may be generated during the subsequent pulverization process, and the physical properties of the super absorbent polymer finally formed may be deteriorated. Therefore, the drying may be preferably performed at a temperature of about 150°C to about 200°C, and more preferably, at a temperature of about 160°C to about 180°C.

Meanwhile, the drying step may be carried out for about 20 minutes to about 90 minutes, in consideration of the process efficiency, but is not limited thereto.

In the drying step, any drying method may be selected and used without limitation in view of constitution, as long as it is commonly used in the process of drying the water-containing gel polymer. Specifically, the drying step may be carried out by a method such as hot air supply, infrared irradiation, microwave irradiation or ultraviolet irradiation, etc. When the drying step as above is finished, the water content of the polymer may be about 0.1% by weight to about 10% by weight.

Next, the step of pulverizing the dried polymer obtained through the drying step is performed.

The polymer powder obtained through the pulverizing step may have a particle diameter of about 150 $\mu$m to about 850 $\mu$m. Specific examples of a pulverizer that may be used to achieve the above particle diameter may include a pin mill, a hammer mill, a screw mill, a roll mill, a disc mill, or a jog mill, etc., but are not limited to the above-described examples.

In order to manage the physical properties of the super absorbent polymer powder that is finally commercialized after the pulverization step, a separate process of classifying the polymer powders obtained after the pulverization according to the particle size may be carried out. Preferably, a polymer having a particle diameter of about 150 $\mu$m to about 850 $\mu$m is classified, and only the polymer powder having such a particle diameter is subjected to a surface crosslinking reaction, followed by commercialization.

Meanwhile, after performing the process of forming the above-described base polymer powder, a surface-crosslinked layer may be formed by additionally crosslinking the surface of the base polymer powder in the presence of a surface crosslinking agent, and as a result, a super absorbent polymer may be prepared.

As the surface crosslinking agent, a compound capable of reacting with functional groups of the polymer is used, and for example, polyalcohol compounds, polyepoxy compounds, polyamine compounds, haloepoxy compounds, condensates of haloepoxy compounds, oxazoline compounds, or alkylene carbonate compounds, etc. may be used.

Specifically, examples of the polyalcohol compounds may include one or more selected from the group consisting of di-, tri-, tetra- or polyethylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexanediol, and 1,2-cyclohexanedimethanol.

Further, as the polyepoxy compounds, ethylene glycol diglycidyl ether, polyethylene glycol diglycidyl ether, and glycidol, etc. may be used. As the polyamine compounds, one or more selected from the group consisting of ethylenediamine, diethylenetriamine, triethylenetetraamine, tetraethylenepentamine, pentaethylenehexamine, polyethyleneimine, and polyamidepolyamine may be used.

As the haloepoxy compound, epichlorohydrin, epibromohydrin and $\alpha$-methyl epichlorohydrin may be used. Meanwhile, examples of the mono-, di- or polyoxazolidinone compound may include 2-oxazolidinone, etc.

As the alkylene carbonate compound, ethylene carbonate, etc. may be used.

These compounds may be used alone or in combination thereof.

The content of the surface crosslinking agent to be added may be properly specifically selected depending on the types of the added surface crosslinking agent or the reaction conditions, but the surface crosslinking agent may be commonly used in an amount of 0.001 part by weight to 5 parts by weight, preferably 0.01 part by weight to 2 parts by weight, and more preferably 0.05 parts by weight to 3 parts by weight with respect to 100 parts by weight of the base polymer.

Further, a method of adding the surface crosslinking agent to the base polymer powder is not limited in the constitution. For example, a method of placing the surface crosslinking agent and the base polymer powder in a reactor and mixing them, a method of spraying the surface crosslinking agent onto the base polymer powder, a method of continuously supplying the base polymer powder and the surface crosslinking agent to a mixer continuously operated and mixing them, etc. may be used.

When the surface crosslinking agent is added, water and methanol may be further added after mixing. When water and methanol are added, it is advantageous in that the surface crosslinking agent may be evenly dispersed in the base polymer powder. At this time, the amount of water and methanol to be added may be preferably controlled with respect to 100 parts by weight of the base polymer powder in order to induce uniform dispersion of the surface crosslinking agent, to prevent agglomeration of the base polymer powder, and at the same time, to optimize the surface penetration depth of the surface crosslinking agent.

The surface crosslinking reaction may be performed by heating the base polymer powder, to which the surface crosslinking agent is added, at about 160°C or higher for about 20 minutes or more. In particular, in order to prepare a super absorbent polymer that more appropriately satisfies the physical properties according to one embodiment, the surface crosslinking process conditions include a maximum reaction temperature of about 180°C to 200°C, and a holding time of about 20 minutes or more, or about 20 minutes or more and 1 hour or less at the maximum reaction temperature. In addition, the heating time which is taken from the temperature at the time of the initial reaction, for example, about 160°C or higher, or about 160°C to 170°C, to the maximum reaction temperature may be controlled to about 10 minutes or more, or about 10 minutes or more and about 1 hour or less. It was confirmed that the super absorbent polymer appropriately meeting the physical properties of one embodiment may be prepared by the satisfying the above-mentioned surface crosslinking process conditions.

A means for raising the temperature for surface crosslinking reaction is not particularly limited. Heating may be performed by providing a heating medium or by directly providing a heat source. In this regard, the kind of the applicable heating medium may be steam, hot air, a hot fluid such as hot oil or the like, but the present invention is not limited thereto. The temperature of the heating medium to be provided may be properly selected in consideration of the means of the heating medium, the heating rate, and the target temperature. Meanwhile, as the heat source to be directly provided, an electric heater or a gas heater may be used, but the present invention is not limited to these examples.

The super absorbent polymer obtained according to the above-described preparation method may exhibit very excellent properties, in which overall physical properties, such as water retention capacity and absorbency under pressure, etc., are improved at the same time, and accordingly, it may be suitably used in hygiene products such as diapers, etc.

Hereinafter, preferred exemplary embodiments are provided for better understanding of the present invention. However, the following exemplary embodiments are only for illustrating the present invention, and it is apparent to those skilled in the art that various changes and modifications are possible, without departing from the scope and spirit of the present invention, as disclosed in the accompanying claims.

[Example]

**<Preparation of composition for preparing super absorbent polymer>**

**Example 1-1**

450 g of acrylic acid, 3 g of polyethylene glycol diacrylate 400, and 0.04 g of diphenyl(2,4,6-trimethylbenzoyl) phosphine oxide were mixed, and 580 g of a 31.5% aqueous sodium hydroxide solution were introduced to prepare an acrylic acid monomer composition.

Separately, 5 g of $ZrO_2$ beads as a pulverization medium was weighed and placed in a 10 mL vial. 12 mg of polyvinylpyrrolidone (PVP, Aldrich's PVP10; a weight average molecular weight of 10,000) as a dispersant was added thereto, and then 24 mg of clay powder (Bentonite, BYK's OPTIGEL CK, particle diameter range of 1-5 $\mu$m, average particle diameter (D50) of 3 $\mu$m) was added. 4.7 g of the acrylic acid monomer composition was added thereto, and mixed by shaking using a shaker (JEIO TECH, SK-600) at 300 rpm for 4 hours to prepare a composition for preparing a super absorbent polymer.

**Examples 1-2 to 1-3 and Comparative Examples 1-1 to 1-4**

Compositions for preparing a super absorbent polymer of Examples 1-2 to 1-3 and Comparative Examples 1-1 to 1-4 were prepared in the same manner as in Example 1-1, respectively, except that the type of dispersant and input amount thereof were changed as in Table 1 below.

The poly(acrylic acid) of Example 1-5 was a product manufactured by Wako Pure Chemical with a weight average molecular weight of 25,000 g/mol, and the poly(ethylene oxide) of Comparative Example 1-6 was a product manufactured by Sigma-Aldrich with a weight average molecular weight of 100,000 g/mol.

DISPERBYK-102 (BYK) used in Comparative Example 1-2 is a phosphoric acid ester-based polymer, and Sokalan HP-20 (BASF) used in Comparative Example 1-3 is a polyethylene imine-based polymer dispersant.

[Table 1]

|  | Type of dispersant | Input amount of dispersant (mg) | Parts by weight of dispersant with respect to 100 parts by weight of clay |
|---|---|---|---|
| Example 1-1 | PVP | 12 | 50 |
| Example 1-2 | PVP | 7.2 | 30 |
| Example 1-3 | PVP | 6 | 25 |
| Example 1-4 | PVP | 43.2 | 180 |
| Example 1-5 | Poly(acrylic acid) | 12 | 50 |
| Comparative Example 1-1 | - | 0 | 0 |
| Comparative Example 1-2 | DISPERBYK-102 | 12 | 50 |
| Comparative Example 1-3 | Sokalan HP-20 | 12 | 50 |
| Comparative Example 1-4 | PVP | 4.8 | 20 |
| Comparative Example 1-5 | PVP | 52.8 | 220 |
| Comparative Example 1-6 | Poly(ethylene oxide) | 12 | 50 |

**Experimental Example 1: Evaluation of physical properties of composition for preparing super absorbent polymer**

Physical properties of the compositions for preparing a super absorbent polymer of Examples 1-1 to 1-5 and Comparative Examples 1-1 to 1-6 were evaluated by the following methods, respectively, and the results are shown in Table 2.

**(1) Sedimentation rate**

Sedimentation rates of clay particles of each composition of Examples 1-1 to 1-3 and Comparative Examples 1-1 to 1-4 were measured using LUMiSizer Dispersion & particle size analyzer.

In detail, 1.6 mL of the composition for preparing a super absorbent polymer was taken, put into a 10 mm PC cell, and then mounted on a LUMiSizer to measure the transmittance profile for 400 points at an interval of 10 seconds at a temperature of 25°C, 1,500 rpm (~ 280 G). In the transmittance profile thus measured, the threshold was set to 21% and the sedimentation rate was calculated.

**(2) Dispersion stability after 48 hours**

Each 4 g of the compositions for preparing a super absorbent polymer of Examples 1-1 to 1-3 and Comparatives Example 1-1 to 1-4 was placed in a 10 ml vial, which was placed in a vial rack, and left at a temperature of 25°C for 48 hours. Next, whether or not layer separation of the supernatant occurred was visually observed. When the layer separation occurred, it was evaluated as having no dispersion stability (X), and when no layer separation occurred, it was evaluated as having dispersion stability (O).

[Table 2]

|  | Sedimentation rate ($\mu$m/s) | Dispersion stability after 48 hours |
|---|---|---|
| Example 1-1 | 6.55 | O |
| Example 1-2 | 6.73 | O |
| Example 1-3 | 6.42 | O |
| Example 1-4 | 6.82 | O |
| Example 1-5 | 9.9 | O |
| Comparative Example 1-1 | 370 | X |
| Comparative Example 1-2 | 106 | X |

(continued)

|  | Sedimentation rate ($\mu$m/s) | Dispersion stability after 48 hours |
|---|---|---|
| Comparative Example 1-3 | 6.24 | X |
| Comparative Example 1-4 | 138 | X |
| Comparative Example 1-5 | 180 | X |
| Comparative Example 1-6 | 285 | X |

Referring to Table 2, in the compositions for preparing a super absorbent polymer of Examples 1-1 to 1-3, to which the clay dispersion including 25 parts by weight to 50 parts by weight of PVP dispersant with respect to 100 parts by weight of clay was added, sedimentation of clay did not occur well. It was confirmed that the dispersion stability was excellent even after 48 hours.

**<Preparation of Super absorbent polymer>**

**Example 2-1**

(1) Preparation of 4% by weight of clay dispersion

In a flask, 2 g of clay (Bentonite, BYK's OPTIGEL CK, particle diameter range of 1-5 $\mu$m, average particle diameter of 3 $\mu$m) and 1 g (50 parts by weight with respect to 100 parts by weight of clay) of polyvinylpyrrolidone (Aldrich's PVP10; a weight average molecular weight of 10,000) as a polymer dispersant were placed, and water was added such that the total weight of the mixture was 50 g. This mixture was stirred with a magnetic stirrer at 500 rpm for 12 hours to prepare 4% by weight of a clay dispersion.

(2) Preparation of super absorbent polymer

In a 3L glass container, 450 g of acrylic acid (AA), 3 g of polyethylene glycol diacrylate 400 (PEGDA 400), 0.04 g of diphenyl(2,4,6-tribenzoyl)-phosphine oxide were placed and dissolved, and then 580 g of a 31.5% aqueous sodium hydroxide solution was added to prepare an acrylic acid monomer composition.
4% by weight of the clay dispersion prepared in (1) was added to the monomer composition such that the content of clay was 0.5 parts by weight with respect to 100 parts by weight of acrylic acid, and sodium bicarbonate (SBC) which is a carbonate-based blowing agent was added in an amount of 0.1 part by weight with respect to 100 parts by weight of acrylic acid, thereby preparing a composition for preparing a super absorbent polymer.
1000 g of the composition for preparing a super absorbent polymer was poured into a stainless steel container with a width of 250 mm, a length of 250 mm, and a height of 30 mm, and UV polymerization was performed for 90 seconds by irradiating ultraviolet rays (irradiation dose of 10 mV/cm$^2$) to obtain a water-containing gel polymer.
Thereafter, the sheet-type water-containing gel polymer thus obtained was put into a meat chopper to obtain a water-containing gel particle powder, which was then dried in an oven, and as a result, the water content of the dry product was 1% or less. The dry particles were pulverized with a pulverizer and classified to prepare a base polymer with a size of 150 $\mu$m to 850 $\mu$m.
To 100 g of the base polymer powder, 6 g of an aqueous solution of a surface crosslinking agent containing 3 g of ethylene carbonate was sprayed, and stirred at room temperature to evenly distribute the surface crosslinking solution on the base polymer powder. Then, the base polymer powder mixed with the surface crosslinking solution was put into a surface crosslinking reactor, which was heated to 190°C for 30 minutes, and the surface crosslinking reaction was performed at the same temperature for 15 minutes.
After the surface crosslinking process, the powder was classified with a standard mesh sieve of ASTM standard to prepare a super absorbent polymer having a particle diameter of 150 $\mu$m to 850 $\mu$m.

**Examples 2-2 to 2-3 and Comparative Examples 2-1 to 2-3**

Each clay dispersion was prepared in the same manner as in (1) of Example 2-1, except that when preparing the clay dispersion, the type and content of the clay and dispersant were adjusted as shown in Table 3 below. Then, the super absorbent polymers of Examples 2-2 to 2-3 and Comparative Examples 2-1 to 2-3 were prepared in the same manner as (2) of Example 2-1.

[Table 3]

|  | Clay | Dispersant | Parts by weight of clay with respect to 100 parts by weight of AA | Parts by weight of dispersant with respect to 100 parts by weight of clay |
|---|---|---|---|---|
| Example 2-1 | Bentonite | PVP | 0.5 | 50 |
| Example 2-2 | Bentonite | PVP | 0.25 | 100 |
| Example 2-3 | Bentonite | PVP | 0.25 | 50 |
| Comparative Example 2-1 | Bentonite | - | 0.5 | 0 |
| Comparative Example 2-2 | Bentonite | Sokalan HP-20 | 0.5 | 50 |
| Comparative Example 2-3 | Bentonite | Sokalan HP-20 | 1.0 | 50 |

**Experimental Example 2: Evaluation of physical properties of super absorbent polymer**

Physical properties of the super absorbent polymers of Examples 2-1 to 2-3 and Comparative Examples 2-1 to 2-3 were evaluated by the following methods, respectively, and the results are shown in Table 4.

(1) Effective Absorption Capacity (EFFC)

The EFFC value was calculated according to the following equation.

$$EFFC = 1/2 \ (CRC+AUP)$$

In the equation, CRC and AUP were measured by the following methods.

a) Measurement of Centrifuge Retention Capacity (CRC)

CRC of the super absorbent polymer was measured in accordance with EDANA method WSP 241.2.
In detail, from the polymers obtained through Examples and Comparative Examples, polymers classified with a sieve of #30-50 were obtained. This super absorbent polymer $W_0(g)$ (about 0.2 g) was uniformly put in a non-woven bag, followed by sealing, and then immersed in physiological saline (0.9% by weight) at room temperature. After 30 minutes, water was drained from the bag using a centrifuge for 3 minutes under the condition of 250 G, and the weight $W_2(g)$ of the bag was measured. In addition, after performing the same procedure without using the polymer, the weight $W_1(g)$ at that time was measured.
CRC (g/g) was calculated using the obtained weights according to the following equation.

$$CRC \ (g/g) = \{[W_2(g) - W_1(g)]/W_0(g)\} - 1$$

b) Measurement of Absorbency Under Pressure (AUP)

AUP of 0.7 psi of the super absorbent polymer was measured in accordance with EDANA method WSP 242.2.
First, when measuring absorbency under pressure, the classified polymer used at the time of CRC measurement was used.
In detail, a 400 mesh stainless steel net was installed in the bottom of a plastic cylinder having an internal diameter of 60 mm. The super absorbent polymer $W_0(g)$ (0.90 g) was uniformly scattered on the stainless steel net under conditions of room temperature and humidity of 50%. A piston capable of uniformly providing a load of 0.7 psi was put thereon, in which an external diameter of the piston was slightly smaller than 60 mm, there was no gab between the internal wall of the cylinder and the piston, and the jig-jog of the cylinder was not interrupted. At this time, the weight $W_4(g)$ of the apparatus was measured.
After putting a glass filter having a diameter of 90 mm and a thickness of 5 mm in a petri dish having a diameter of 150 mm, a physiological saline solution consisting of 0.9% by weight of sodium chloride was poured until the surface level of the physiological saline solution became equal to the upper surface of the glass filter. A sheet of filter paper having a diameter of 90 mm was put on the glass filter. The measurement apparatus was mounted on the filter paper, thereby getting the liquid absorbed under the load for 1 hour. 1 hour later, the weight $W_5(g)$ was measured after lifting the measurement apparatus up.

AUP(g/g) (g/g) was calculated from the obtained weights according to the following equation.

$$AUP(g/g) = [W_5(g) - W_4(g)]/W_3(g)$$

(2) Color b

The color b value of the super absorbent polymer was measured in accordance with ASTM D2985 standard.

[Table 4]

|  | EFFC | Color b |
|---|---|---|
| Example 2-1 | 27.4 | 5.0 |
| Example 2-2 | 27.4 | 5.3 |
| Example 2-3 | 27.3 | 4.9 |
| Comparative Example 2-1 | 26.8 | 4.8 |
| Comparative Example 2-2 | 27.4 | 8.6 |
| Comparative Example 2-3 | 27.0 | 11.3 |

Referring to Table 4, in Comparative Example 2-1, the dispersant was not included, and thus the dispersion stability of the clay was reduced, and as a result, the EFFC value was significantly reduced.

On the other hand, when Examples 2-1 to 2-3 and Comparative Examples 2-2 and 2-3 were compared, each using the clay dispersion including the dispersant together with clay, Comparative Examples 2-2 and 2-3 using Sokalan HP-20 as the dispersant were found to show higher color b value than Examples 2-1 to 2-3 using PVP.

From the above results, it was be confirmed that the composition for preparing a super absorbent polymer of the present invention has excellent dispersion stability of clay within the composition, thereby improving the absorption properties of the prepared super absorbent polymer. In addition, it can be confirmed that the super absorbent polymer prepared from the composition for preparing a super absorbent polymer has no concern about discoloration due to a dispersant and exhibits excellent color characteristics.

**Claims**

1. A composition for preparing a super absorbent polymer comprising:

    a clay;
    a polymer dispersant including two or more functional groups selected from the group consisting of an amine group, a carbonyl group, and a hydroxyl group;
    a water-soluble ethylenically unsaturated monomer having acid groups and at least a part of said acid groups being neutralized; and
    a polymerization initiator,
    wherein the polymer dispersant is included in an amount of more than 20 parts by weight to 200 parts by weight or less with respect to 100 parts by weight of the clay.

2. The composition for preparing a super absorbent polymer of claim 1, wherein the polymer dispersant is included in an amount of 25 parts by weight to 100 parts by weight with respect to 100 parts by weight of the clay.

3. The composition for preparing a super absorbent polymer of claim 1 or 2, wherein the clay is one or more selected from the group consisting of montmorillonite, saponite, nontronite, laponite, beidellite, hectorite, vermiculite, magadite, bentonite, kaolin, serpentine, and mica.

4. The composition for preparing a super absorbent polymer of any one of claims 1 to 3, wherein an average particle diameter (D50) of the clay is 0.025 μm to 10 μm.

5. The composition for preparing a super absorbent polymer of any one of claims 1 to 4, wherein the polymer dispersant comprises an amine group and a carbonyl group; or carbonyl group and a hydroxyl group.

6. The composition for preparing a super absorbent polymer of any one of claims 1 to 5, wherein the polymer dispersant is one or more selected from the group consisting of polyvinylpyrrolidone, polyacrylamide, and polyacrylic acid.

7. The composition for preparing a super absorbent polymer of any one of claims 1 to 6, wherein the neutralization degree of the water-soluble ethylenically unsaturated monomer is 50 to 95%.

8. The composition for preparing a super absorbent polymer of any one of claims 1 to 7, wherein a sedimentation rate of the clay is 100 μm/s or less.

9. The composition for preparing a super absorbent polymer of any one of claims 1 to 8, wherein the water-soluble ethylenically unsaturated monomer is one or more selected from the group consisting of anionic monomers such as acrylic acid, methacrylic acid, maleic anhydride, fumaric acid, crotonic acid, itaconic acid, 2-acryloyl ethane sulfonic acid, 2-methacryloyl ethane sulfonic acid, 2-(meth)acryloyl propane sulfonic acid, or 2-(meth)acrylamide-2-methylpropane sulfonic acid, and salts thereof;

   nonionic hydrophilic monomers such as (meth)acrylamide, N-substituted (meth)acrylate, 2-hydroxyethyl(meth)acrylate, 2-hydroxypropyl(meth)acrylate, methoxypolyethyleneglycol(meth)acrylate, or polyethyleneglycol(meth)acrylate; and
   amino group-containing unsaturated monomers such as (N,N)-dimethylaminoethyl(meth)acrylate or (N,N)-dimethylaminopropyl(meth)acrylamide, and quaternary compounds thereof.

10. The composition for preparing a super absorbent polymer of any one of claims 1 to 9, wherein the content of the clay in the composition for preparing a super absorbent polymer is 0.1 part by weight to 1 part by weight with respect to 100 parts by weight of the ethylenically unsaturated monomer.

11. A method of preparing a super absorbent polymer, the method comprising the steps of:

   preparing a water-containing gel polymer by performing a polymerization reaction of the composition for preparing a super absorbent polymer of any one of claims 1 to 10 by heating and/or irradiating light;
   preparing a base polymer by drying and pulverizing the water-containing gel polymer; and
   forming a surface-crosslinked layer by further crosslinking the surface of the base polymer in the presence of a surface crosslinking agent.

12. A super absorbent polymer comprising:

   a crosslinked polymer of a water-soluble ethylenically unsaturated monomers having an acid group and at least a portion of the acid group being neutralized; and
   a clay having a surface modified with a polymer dispersant including two or more functional groups selected from the group consisting of an amine group, a carbonyl group, and a hydroxyl group,
   wherein the polymer dispersant is included in an amount of more than 20 parts by weight to less than 200 parts by weight based on 100 parts by weight of the clay.

【FIG. 1】

<div align="center">

**INTERNATIONAL SEARCH REPORT**

</div>

| International application No. |
|---|
| **PCT/KR2024/002737** |

**A. CLASSIFICATION OF SUBJECT MATTER**

**C08F 2/44**(2006.01)i; **C08F 220/06**(2006.01)i; **C08F 220/28**(2006.01)i; **C08F 220/38**(2006.01)i; **C08F 220/56**(2006.01)i; **C08F 222/06**(2006.01)i; **C08K 3/34**(2006.01)i; **C08J 3/075**(2006.01)i; **C08J 3/205**(2006.01)i; **C08J 3/24**(2006.01)i

According to International Patent Classification (IPC) or to both national classification and IPC

**B. FIELDS SEARCHED**

Minimum documentation searched (classification system followed by classification symbols)

C08F 2/44(2006.01); A61L 15/18(2006.01); C08F 2/32(2006.01); C08F 20/10(2006.01); C08F 20/66(2006.01); C08F 220/10(2006.01); C08J 3/24(2006.01); C08K 9/04(2006.01); C09K 5/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(super absorbent polymer), 클레이(clay), 고분자 분산제(polymer dispersant), 에틸렌계 단량체(ethylene monomer), 아민기(amine group), 카보닐기(carbonyl group), 수산기(hydroxyl group)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2017-0143452 A (LG CHEM, LTD.) 29 December 2017 (2017-12-29)<br>See claims 1, 4 and 11. | 1-3,12 |
| Y | KR 10-2014-0056225 A (SUMITOMO SEIKA CHEMICALS CO., LTD.) 09 May 2014 (2014-05-09)<br>See paragraphs [0001], [0032]-[0035], [0056], [0083], [0085] and [0135]. | 1-3,12 |
| A | KR 10-2005-0036974 A (BASF AKTIENGESELLSCHAFT) 20 April 2005 (2005-04-20)<br>See entire document. | 1-3,12 |
| A | KR 10-2011-0057707 A (JINSANG CORPORATION) 01 June 2011 (2011-06-01)<br>See entire document. | 1-3,12 |
| A | KR 10-2016-0016645 A (LG CHEM, LTD.) 15 February 2016 (2016-02-15)<br>See entire document. | 1-3,12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 June 2024** | **14 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/002737** |

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **4-11**
because they are dependent claims and are not drafted in accordance with the second and third sentences of Rule 6.4(a).

Form PCT/ISA/210 (continuation of first sheet) (July 2022)

| INTERNATIONAL SEARCH REPORT | | | | | | International application No. |
|---|---|---|---|---|---|---|
| Information on patent family members | | | | | | PCT/KR2024/002737 |

| Patent document cited in search report | | | Publication date (day/month/year) | Patent family member(s) | | | Publication date (day/month/year) |
|---|---|---|---|---|---|---|---|
| KR | 10-2017-0143452 | A | 29 December 2017 | CN | 108884239 | A | 23 November 2018 |
| | | | | CN | 108884239 | B | 22 October 2021 |
| | | | | EP | 3409712 | A1 | 05 December 2018 |
| | | | | KR | 10-2075736 | B1 | 10 February 2020 |
| | | | | US | 11459430 | B2 | 04 October 2022 |
| | | | | US | 2019-0077927 | A1 | 14 March 2019 |
| | | | | WO | 2017-222307 | A1 | 28 December 2017 |
| KR | 10-2014-0056225 | A | 09 May 2014 | AR | 087394 | A1 | 19 March 2014 |
| | | | | BR | 112014002637 | A2 | 13 June 2017 |
| | | | | BR | 112014002637 | A8 | 20 June 2017 |
| | | | | BR | 112014002637 | B1 | 03 May 2022 |
| | | | | CA | 2843678 | A1 | 07 February 2013 |
| | | | | CA | 2843678 | C | 29 December 2020 |
| | | | | CA | 3050763 | A1 | 07 February 2013 |
| | | | | CA | 3050763 | C | 25 May 2021 |
| | | | | CN | 103703028 | A | 02 April 2014 |
| | | | | CN | 103703028 | B | 05 April 2017 |
| | | | | CN | 106046224 | A | 26 October 2016 |
| | | | | CN | 106046224 | B | 24 August 2021 |
| | | | | EP | 2740747 | A1 | 11 June 2014 |
| | | | | EP | 2740747 | B1 | 15 March 2017 |
| | | | | EP | 3009458 | A1 | 20 April 2016 |
| | | | | EP | 3009458 | B1 | 22 November 2017 |
| | | | | EP | 3023442 | A1 | 25 May 2016 |
| | | | | EP | 3023442 | B1 | 22 November 2017 |
| | | | | EP | 3023443 | A1 | 25 May 2016 |
| | | | | EP | 3023443 | B1 | 25 July 2018 |
| | | | | EP | 3398974 | A1 | 07 November 2018 |
| | | | | EP | 3398974 | B1 | 24 August 2022 |
| | | | | ES | 2627533 | T3 | 28 July 2017 |
| | | | | ES | 2689550 | T3 | 14 November 2018 |
| | | | | JP | 2018-103183 | A | 05 July 2018 |
| | | | | JP | 6293484 | B2 | 14 March 2018 |
| | | | | JP | 6872503 | B2 | 19 May 2021 |
| | | | | KR | 10-1832549 | B1 | 26 February 2018 |
| | | | | SG | 2013095260 | A | 28 March 2014 |
| | | | | TW | 201313752 | A | 01 April 2013 |
| | | | | TW | I534158 | B | 21 May 2016 |
| | | | | US | 2014-0127510 | A1 | 08 May 2014 |
| | | | | US | 9199218 | B2 | 01 December 2015 |
| | | | | WO | 2013-018571 | A1 | 07 February 2013 |
| KR | 10-2005-0036974 | A | 20 April 2005 | AT | E319485 | T1 | 15 March 2006 |
| | | | | AU | 2003-250154 | A1 | 11 March 2004 |
| | | | | BR | 0313517 | A | 14 June 2005 |
| | | | | CN | 1322902 | C | 27 June 2007 |
| | | | | CN | 1678357 | A | 05 October 2005 |
| | | | | DE | 60303962 | T2 | 10 August 2006 |
| | | | | EP | 1551467 | A1 | 13 July 2005 |
| | | | | EP | 1551467 | B1 | 08 March 2006 |
| | | | | ES | 2256794 | T3 | 16 July 2006 |

Form PCT/ISA/210 (patent family annex) (July 2022)

| Patent document cited in search report | | | Publication date (day/month/year) | Patent family member(s) | | | Publication date (day/month/year) |
|---|---|---|---|---|---|---|---|
| | | | | JP | 2005-536598 | A | 02 December 2005 |
| | | | | JP | 4314193 | B2 | 12 August 2009 |
| | | | | US | 2005-0239942 | A1 | 27 October 2005 |
| | | | | US | 7329701 | B2 | 12 February 2008 |
| | | | | WO | 2004-018005 | A1 | 04 March 2004 |
| | | | | ZA | 200502353 | B | 31 May 2006 |
| KR | 10-2011-0057707 | A | 01 June 2011 | None | | | |
| KR | 10-2016-0016645 | A | 15 February 2016 | CN | 106661302 | A | 10 May 2017 |
| | | | | CN | 106661302 | B | 27 September 2019 |
| | | | | DE | 202015009625 | U1 | 07 November 2018 |
| | | | | EP | 3181638 | A1 | 21 June 2017 |
| | | | | EP | 3181638 | B1 | 03 April 2019 |
| | | | | KR | 10-1899924 | B1 | 18 September 2018 |
| | | | | KR | 10-1997726 | B1 | 08 July 2019 |
| | | | | KR | 10-2016-0016673 | A | 15 February 2016 |
| | | | | US | 10258962 | B2 | 16 April 2019 |
| | | | | US | 2017-0361305 | A1 | 21 December 2017 |
| | | | | WO | 2016-021875 | A1 | 11 February 2016 |

International application No.

**PCT/KR2024/002737**

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230028618

- KR 1020240030239